# EUROPÄISCHE PATENTANMELDUNG

(11) **EP 1 855 172 A1**
(43) Veröffentlichungstag der Anmeldung: **14.11.2007**
(21) Anmeldenummer: 06009891.0
(22) Anmeldetag: 12.05.2006
(51) Int. Cl.: G05B 19/418, G05B 23/02

(54) **Verfahren zur Alarmunterdrückung in einer Prozessanlage**

(71) Anmelder: SIEMENS AKTIENGESELLSCHAFT, 80333 München (DE)
(72) Erfinder: Fax, Martin, 76287 Rheinstetten-Mörsch (DE); Thurau, Oliver, 67117 Limburgerhof (DE); von Au, Helmut, 76706 Dettenhelm (DE)

(57) **Zusammenfassung**

Ein Verfahren zum Betreiben einer Prozessanlage (1), bei der auf Prozessebene (3) eine Anzahl von Alarminformationen (Alarm Ai,Bi,Ci) zum Anzeigen nicht ordnungsgemäßer Betriebsvorgänge der Prozessanlage (1) generiert werden, zeichnet sich dadurch aus, dass
a) eine Anzahl von Prozesszuständen (Zustand Ai,Bi,Ci) der Prozessanlage (1) definiert wird,
b) jeder Prozesszustand mit der Summe der generierbaren Alarminformationen korreliert wird, wobei jedem aus einem Prozesszustand und einer Alarminformation gebildeten Paar ein erster Wert oder ein zweiter Wert als Korrelationswert zugewiesen wird,
c) ein gegenwärtiger Prozesszustand der Prozessanlage bestimmt wird,
d) in Abhängigkeit von dem bestimmten Prozesszustand diejenigen Alarminformationen nicht zur Anzeige gebracht werden, denen als Korrelationswert der erste Wert zugewiesen wurde.

## Beschreibung

Die vorliegende Erfindung betrifft ein Verfahren nach dem Oberbegriff des Patentanspruchs 1 zum Betreiben einer Prozessanlage, bei der auf Prozessebene eine Anzahl von Alarminformationen zum Anzeigen nicht ordnungsgemäßer Betriebsvorgänge der Prozessanlage generiert wird.

Weiterhin betrifft die vorliegende Erfindung eine Prozessanlage nach dem Oberbegriff des Patentanspruchs 10 mit einer Anzahl von Alarmgebern auf Prozessebene, die zum Generieren einer Anzahl von Alarminformationen zum Anzeigen nicht ordnungsgemäßer Betriebsvorgänge der Prozessanlage ausgebildet sind, und mit einer Alarmanzeigeeinrichtung zum Anzeigen von Alarminformationen. Darüber hinaus betrifft die vorliegende Erfindung ein Computerprogrammprodukt zum Betreiben einer Prozessanlage.

In der Leittechnik von Prozessanlagen, beispielsweise in der Chemieindustrie, der Pharmaindustrie oder der Öl-/Gasindustrie, werden regelmäßig Automatisierungssysteme eingesetzt, die im Falle nicht ordnungsgemäßer Betriebsvorgänge der Prozessanlage, wie Druckabfällen, Temperaturerhöhungen oder dergleichen, eine große Menge an Alarminformationen generieren und an einen Anlagenbediener (Operator) weiterleiten. Dies kann in bestimmten Situationen, beispielsweise beim Abschalten einer Prozessanlage, zu einer Flut systemgenerierter Alarme führen, die vom Operator nicht mehr beherrschbar bzw. überschaubar ist, woraus gegebenenfalls schwerwiegende Unfälle resultieren können.

Internationale Verbände, wie beispielsweise NAMUR (www.namur.de) verlangen daher in der Leittechnik von Prozessanlagen Lösungen, die in der Lage sind, in Abhängigkeit vom Anlagenzustand und der Kombination von anstehenden Alarmen bestimmte Alarme zu aktivieren bzw. zu deaktivieren (so genannte dynamische Alarmverarbeitung). Dies soll zu einer Reduktion des Alarmaufkommens führen und damit eine generelle Wiederherstellung der Anlagensicherheit ermöglichen.

Aus dem Stand der Technik ist in diesem Zusammenhang die starre, d. h. nicht dynamische Filterung von Alarmen bekannt, bei der für jeden einzelnen generierbaren Alarm bestimmte Filterregeln explizit angegeben werden müssen. Prozessbedingte Alarmzustände (Teil-)Anlagenzustände werden vom System nicht erkannt oder dynamisch berücksichtigt.

Andere vorbekannte Lösungen ermöglichen die Filterung von Alarmen direkt an der Alarmquelle, d. h. auf Prozessebene, durch den Einbau einer entsprechenden Logik. Bei einer derartigen Lösung ist besonders als nachteilig anzusehen, dass eine Fehlerrückverfolgbarkeit nicht mehr gegeben ist. An der Quelle gefilterte Alarme können nicht archiviert werden und stehen somit nicht für spätere Analysen oder statistische Auswertungen auf Prozessleitebene zur Verfügung.

Darüber hinaus sind so genannte Alarm-Management-Systeme in Form von designierten, unabhängigen Systemen für das Alarmhandling von Prozessanlagen bekannt. Da sie eigenständig und unabhängig vom Leitsystem der Prozessanlage arbeiten, erfordern sie entsprechende zusätzliche Aufmerksamkeit durch den Anlagenoperator. Des Weiteren bieten derartige unabhängige Systeme nicht den Komfort einer in den Anlagenbetrieb integrierten Lösung und sind darüber hinaus nicht in der Lage, Änderungen der Anlagenleittechnik automatisch zu berücksichtigen, da insbesondere eine getrennte Datenhaltung und ein getrenntes Engineering erfolgen.

Der Erfindung liegt die Aufgabe zugrunde, eine Prozessanlage und ein Verfahren zu deren Betrieb anzugeben, bei denen in einfacher Weise eine Reduktion des Alarmaufkommens in Abhängigkeit von Betriebszuständen der Anlage möglich ist, wobei eine vollständige Rückverfolgbarkeit von Alarminformationen möglich sein soll. Darüber hinaus soll trotz allem eine einfache Bedienbarkeit der Prozessanlage gegeben sein.

Die Aufgabe wird bei einem Verfahren der eingangs genannten Art durch die kennzeichnenden Merkmale des Patentanspruchs 1 gelöst. Erfindungsgemäß ist ein Verfahren zum Betreiben einer Prozessanlage, bei der auf Prozessebene eine Anzahl von Alarminformationen zum Anzeigen nicht ordnungsgemäßer Betriebsvorgänge der Prozessanlage generiert wird, dadurch gekennzeichnet, dass
a) eine Anzahl von Prozesszuständen der Prozessanlage definiert wird,
b) jeder Prozesszustand mit der Summe der generierbaren Alarminformationen korreliert wird, wobei jedem aus einem Prozesszustand und einer Alarminformation gebildeten Paar ein erster Wert oder ein zweiter Wert als Korrelationswert zugewiesen wird,
c) ein gegenwärtiger Betriebszustand der Prozessanlage bestimmt wird,
d) in Abhängigkeit von dem bestimmten Prozesszustand diejenigen Alarminformationen nicht zur Anzeige gebracht werden, denen als Korrelationswert der erste Wert zugewiesen wurde.

Darüber hinaus wird die Aufgabe bei einer Prozessanlage der eingangs genannten Art durch die kennzeichnenden Merkmale des Patentanspruchs 10 gelöst.

Erfindungsgemäß ist eine Prozessanlage mit einer Anzahl von Alarmgebern auf Prozessebene, die zum Generieren einer Anzahl von Alarminformationen zum Anzeigen nicht ordnungsgemäßer Betriebsvorgänge der Prozessanlage ausgebildet sind, und mit einer Alarmanzeigeeinrichtung zum Anzeigen von Alarminformationen gekennzeichnet durch:
- mindestens einen einer Teilgruppe der Alarmgeber zugeordneten Zustandsbaustein, der zum Bestimmen wenigstens eines gegenwärtigen Prozesszustands der Prozessanlage aus einer Anzahl definierter Prozesszustände ausgebildet ist,
- ein Alarmverarbeitungssystem auf Prozessleitebene, das die generierten Alarminformationen und ein den bestimmten Prozesszustand repräsentierendes Zustandssignal empfängt und das zum Korrelieren jedes definierten Prozesszustands mit der Summe der empfangenen Alarminformationen ausgebildet ist, wobei jedem aus einem Prozesszustand und einer Alarminformation gebildeten Paar ein erster Wert oder ein zweiter Wert als Korrelationswert zuweisbar ist, wobei das Alarmverarbeitungssystem in Abhängigkeit von dem Zustandssignal zum Steuern der Alarmanzeigeeinrichtung zum Ausblenden derjenigen Alarminformationen ausgebildet ist, denen als Korrelationswert der erste Wert zugewiesen wurde.

Die Aufgabe wird auch gelöst durch ein Computerprogrammprodukt zum Betreiben einer Prozessanlage, das Programmcodesequenzen aufweist, die bei Ausführung in einem Prozessleitsystem der Prozessanlage in Abhängigkeit von ermittelten Prozesszustandsdaten der Prozessanlage zum Verarbeiten von auf Prozessebene generierten Alarminformationen nach einem erfindungsgemäßen Verfahren ausgebildet sind.

Vorteilhafte Ausgestaltungen der vorliegenden Erfindung sind Gegenstand von Unteransprüchen.

Der vorgeschlagene Lösungsansatz integriert bisherige Alarmunterdrückungsmechanismen mit der Möglichkeit, die Relevanz von Alarminformationen in Form von Prozessalarmen dynamisch, d. h. anhand ermittelter Prozesszustände zu bestimmen und auf diese Weise nichtrelevante Prozessalarme auszublenden, d. h. nicht zur Anzeige zu bringen.

Zu diesem Zweck erfasst das Alarmverarbeitungssystem der Prozessanlage neben der Summe aller Prozessalarme auch die aktuellen Prozesszustände, um diese mit den Prozessalarmen zu korrelieren. Neben den auf Prozessebene generierten Prozessalarmen bzw. Alarminformationen werden also im Kontext der vorliegenden Erfindung auch Prozesszustände eines Automatisierungsprozesses bzw. einzelner Teilprozesse bei funktionaler Verteilung des Automatisierungsprozesses an das Alarmverarbeitungssystem übermittelt.

Das Alarmverarbeitungssystem entscheidet aufgrund einer neuartigen paarweisen Korrelation aus jeweils einem Prozesszustand und einer Alarminformation in Verbindung mit einem jeweils zugeordneten Korrelationswert, welche Prozessalarme bei welchen Prozesszuständen angezeigt werden sollen und welche nicht. Nichtrelevante Alarme können auf diese Weise in Alarmanzeigen für den Operator ausgeblendet werden. Alternativ oder zusätzlich werden ausgeblendete Alarminformationen von akustischen und/oder optischen Signalgebern nicht berücksichtigt.

Da keine Unterdrückung von Alarminformationen an der Alarmquelle stattfindet, können zur Nachverfolgung insbesondere auch die ausgeblendeten Alarminformationen in einem Alarmjournal für eine spätere Nachvollziehbarkeit durch den Operator archiviert werden. Erfindungsgemäß ist somit die Gesamtfunktionalität des vorstehend skizzierten Alarmunterdrückungsmechanismus vollständig in ein vorhandenes Prozessleitsystem integrierbar.

In Weiterbildung des erfindungsgemäßen Verfahrens ist vorgesehen, dass die Korrelation von Prozesszuständen und Alarminformationen in Form wenigstens einer Konfigurationsmatrix erfolgt, wobei eine erste Dimension der Konfigurationsmatrix durch die definierten Prozesszustände und eine zweite Dimension der Konfigurationsmatrix durch die generierbaren Alarminformationen gebildet wird, wobei die Korrelationswerte die Einträge der Konfigurationsmatrix darstellen.

Eine entsprechende Weiterbildung der erfindungsgemäßen Prozessanlage sieht vor, dass das Alarmverarbeitungssystem zum Korrelieren der Prozesszustände und der Alarminformationen wenigstens eine Konfigurationsmatrix aufweist, wobei eine erste Dimension der Konfigurationsmatrix durch die definierten Prozesszustände und eine zweite Dimension der Konfigurationsmatrix durch die generierbaren Alarminformationen gebildet sind, wobei die Korrelationswerte die Einträge der Konfigurationsmatrix darstellen.

Auf diese Weise ist erfindungsgemäß in besonders einfacher Weise durch ein Vornehmen von Eintragungen in die Konfigurationsmatrix ein Projektieren der Alarmrelevanz ohne System- und/oder Programmierkenntnisse möglich.

Aus Sicherheitsgründen ist es grundsätzlich erwünscht, alle generierten Alarminformationen zur Anzeige zu bringen, sofern nicht zustandsbedingte Gründe dagegensprechen, z. B. ist beim Abschalten einer Anlage das Ausblenden einer den erwarteten Druckabfall anzeigenden Alarminformation wünschenswert. Daher ist bei einer besonderen Ausführungsform der Erfindung vorgesehen, dass standardmäßig der zweite Wert (kein Ausblenden) als Korrelationswert zugewiesen wird.

Um eine Rückverfolgbarkeit von Betriebszuständen der Prozessanlage zu gewährleisten, ist gemäß einer anderen Weiterbildung der Erfindung vorgesehen, dass in Abhängigkeit von dem bestimmten Prozesszustand zumindest diejenigen Alarminformationen, denen als Korrelationswert der erste Wert zugewiesen wurde, in einer Speichereinrichtung archiviert werden. Vorzugsweise werden jedoch alle generierten Alarminformationen unabhängig von ihrer gegenwärtigen Relevanz in der Speichereinrichtung archiviert.

Zwecks einer vollständigen Integrierbarkeit der Erfindung in vorhandene Prozessanlagen ist in Weiterbildungen der Erfindung insbesondere vorgesehen, dass der Prozesszustand in Schritt c) des erfindungsgemäßen Verfahrens auf Prozessebene bestimmt und zusammen mit der Summe der generierten Alarminformationen zu einer Prozessleitebene der Prozessanlage übertragen wird und dass die Schritte b) und d) in einem Alarmverarbeitungssystem auf der Prozessleitebene durchgeführt werden.

Vorzugsweise wird bei einem Wechsel der Prozessanlage in einen neuen Prozesszustand im Zeitpunkt des Wechsels Schritt d) des erfindungsgemäßen Verfahrens erneut ausgeführt, wobei anstehende, bereits generierte Alarminformationen in Abhängigkeit von dem neuen Prozesszustand zur Anzeige gebracht werden.

Auf diese Weise ist eine vollständig dynamische Alarmunterdrückung möglich.

In Weiterbildung des erfindungsgemäßen Verfahrens ist noch vorgesehen, dass bei fehlerhafter Bestimmung des Prozesszustands in Schritt c) im nachfolgenden Schritt d) auch alle weiteren generierten Alarminformationen zur Anzeige gebracht werden.

Auf diese Weise ist zum Erreichen einer erhöhten Anlagensicherheit gewährleistet, dass bei fehlerhaftem Arbeiten der erfindungsgemäßen Alarmunterdrückung keine generierten Alarminformationen verloren gehen.

Wenn ein von der erfindungsgemäßen Anlage durchgeführter Automatisierungsprozess funktional in mehrere Teilprozesse aufgeteilt ist, sieht eine Weiterbildung der Erfindung vor, dass jedem Teilprozess eine Anzahl von Teilprozesszuständen und eine Anzahl von generierbaren Alarminformationen in Form einer Alarmgruppe zugeordnet werden und dass die Schritte b) bis d) des erfindungsgemäßen Verfahrens für jeden Teilprozess separat ausgeführt werden.

Weitere Eigenschaften und Vorteile der vorliegenden Erfindung ergeben sich aus der nachfolgenden Beschreibung von Ausführungsbeispielen anhand der Zeichnung.

Es zeigt:
- Figur 1: ein schematisches Blockschaltbild einer erfindungsgemäßen Prozessanlage,
- Figur 2: eine schematische Darstellung einer Bildung von Alarmgruppen in der erfindungsgemäßen Prozessanlage gemäß Figur 1,
- Figur 3: anhand einer detaillierten Darstellung einen Zustandsbaustein der Prozessanlage gemäß Figur 1,
- Figur 4: ein Zeitablaufdiagramm des Alarmverhaltens einer nach einem erfindungsgemäßen Verfahren betriebenen Prozessanlage und
- Figur 5: ein Flussdiagramm einer Ausgestaltung des erfindungsgemäßen Verfahrens.

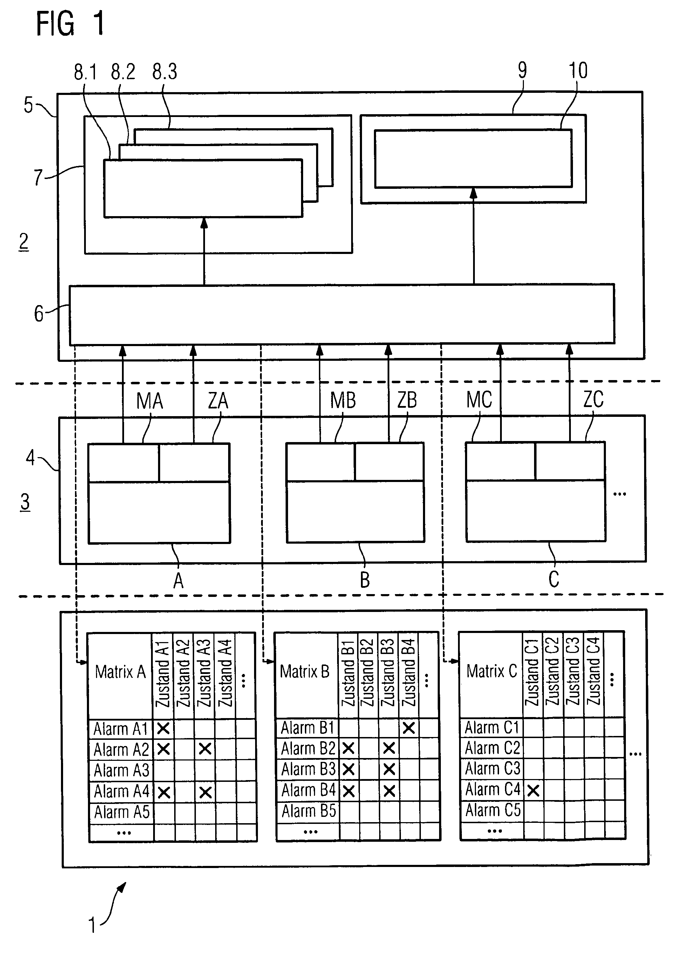

Figur 1 zeigt eine Prozessanlage 1, beispielsweise zur Durchführung von chemischen oder pharmazeutischen Prozessen oder für Prozesse in der Öl-/Gasindustrie, der holzverarbeitenden Industrie, der Papierindustrie oder dergleichen. Eine derartige Anlage weist grundsätzlich eine Prozessleitebene 2 sowie eine Prozessebene 3 auf, wobei auf letzterer die eigentlichen Automatisierungsprozesse angesiedelt sind, die für Art und Einsatz der Prozessanlage charakteristisch sind. In Figur 1 ist exemplarisch ein derartiger Automatisierungsprozess dargestellt und mit Bezugszeichen 4 versehen.

Auf Prozessleitebene 2 besitzt die erfindungsgemäße Prozessanlage 1 ein Alarmsystem 5, das zunächst ein Alarmverarbeitungssystem 6 aufweist, welches vorzugsweise softwaretechnisch in einer nicht explizit dargestellten Datenverarbeitungseinrichtung ausgebildet ist. Das Alarmverarbeitungssystem 6 steht in Wirkverbindung mit einer Alarmanzeigeeinrichtung 7, die ihrerseits eine Anzahl von Alarmanzeigen/Alarmsignalgebern 8.1 bis 8.3 aufweist, bei denen es sich beispielsweise um visuelle/optische Alarmanzeigen, wie Lampen oder Bildschirmfenster, oder um akustische Alarmanzeigen, wie Hupen oder Sirenen, handeln kann. Darüber hinaus steht das Alarmverarbeitungssystem 6 in Wirkverbindung mit einer Speichereinrichtung 9, die vorliegend zum Speichern einer Archivdatei 10 in Form eines so genannten Alarmjournals ausgebildet ist.

Auf Prozessebene 3 besitzt die erfindungsgemäße Prozessanlage 1 als Bestandteile des Automatisierungsprozesses 4 eine Reihe von Teilprozessen A, B, C, die jeweils mit bestimmten Teil- oder Unterprozessen des Automatisierungsprozesses 4 identifizierbar sind. Jeder der drei Prozesse A bis C umfasst eine Reihe von nicht explizit dargestellten prozesstechnischen Arbeitsvorgängen, denen bei einer Prozessanlage der in Figur 1 gezeigten Art regelmäßig Überwachungseinrichtungen in Form von Druck-, Temperatursensoren oder dergleichen zugeordnet sind, welche Prozesszustände des jeweiligen Teilprozesses A bis C überwachen. Darüber hinaus sind derartigen Überwachungseinrichtungen regelmäßig eine Anzahl von Alarmgebern auf Prozessebene zugeordnet, die zum Generieren einer Anzahl von Alarminformationen zum Anzeigen nicht ordnungsgemäßer Betriebsvorgänge der Prozessanlage bzw. des jeweiligen (Teil-)Prozesses ausgebildet sind, z. B. wenn ein gemessener Druck stark abfällt.

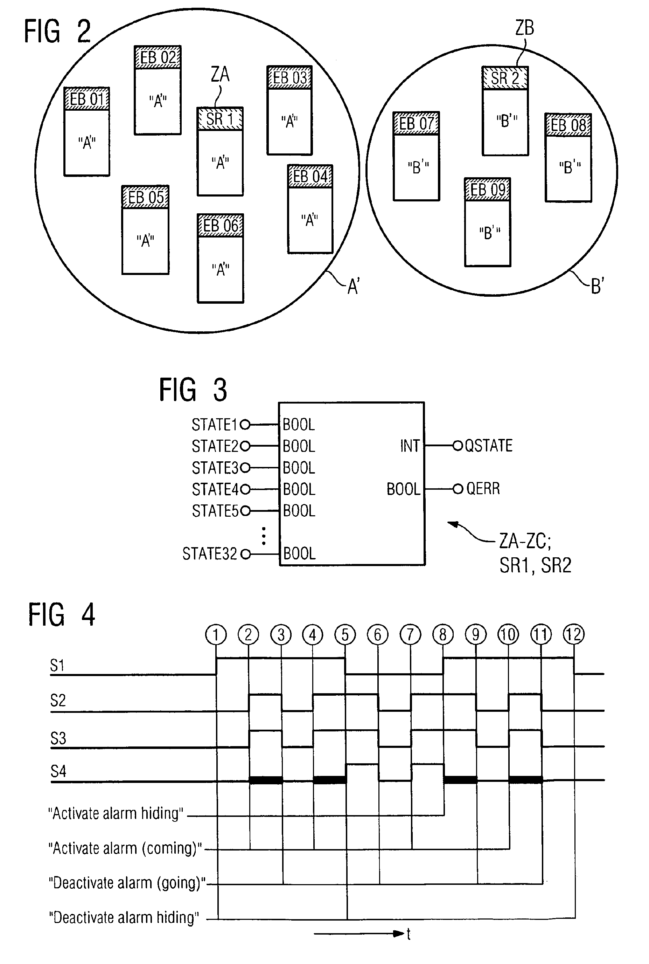

In alarmtechnischer Hinsicht kann daher jeder der in Figur 1 dargestellten Teilprozesse A bis C bzw. die im Rahmen des betreffenden Teilprozesses vorgesehenen Alarmgeber auch als Alarmgruppe bezeichnet werden, auf deren konkrete Ausgestaltung im Falle der vorliegenden Erfindung weiter unten anhand der Figur 2 noch detailliert eingegangen wird.

Jeder der Teilprozesse A bis C bzw. die entsprechende Alarmgruppe wirkt mit einem Meldebaustein oder Meldemodul MA bis MC und mit einem Zustandsbaustein oder Zustandsmodul ZA bis ZC zusammen. Die Meldebausteine MA bis MC und die Zustandsbausteine ZA bis ZC stehen ihrerseits jeweils mit dem Alarmverarbeitungssystem 6 des Alarmsystems 5 in signaltechnischer Wirkverbindung.

Wie aus Gründen der Übersichtlichkeit im unteren Teil der Figur 1 dargestellt ist, beinhaltet das Alarmverarbeitungssystem 6 eine Anzahl von Konfigurationsmatrizen Matrix A, Matrix B, Matrix C. Jede der Matrizen ist einem der Teilprozesse A bis C bzw. der entsprechenden Alarmgruppe zugeordnet. Eine erste Dimension (Spalten) der Konfigurationsmatrizen Matrix A, Matrix B, Matrix C wird durch vordefinierte Prozesszustände des entsprechenden Teilprozesses A bis C gebildet. Diese Prozesszustände sind in Figur 1 mit Zustand Ai, Zustand Bi, Zustand Ci bezeichnet, wobei i = 1, 2, ..., N. Dabei bezeichnet N eine maximale Anzahl möglicher Zustände pro Teilprozess, wobei N von Teilprozess zu Teilprozess variieren kann. Die zweite Dimension (Zeilen) der Konfigurationsmatrizen Matrix A, Matrix B, Matrix C ist durch die jeweilige Summe der für den entsprechenden Teilprozess A bis C generierbaren Alarminformationen gebildet. Dabei entspricht jede der in Figur 1 mit Alarm Ai, Alarm Bi, Alarm Ci bezeichneten Alarminformationen dem Alarmsignal eines Alarmgebers aus der dem entsprechenden Teilprozess jeweils zugeordneten Alarmgruppe. Dabei ist jeder der dargestellten Alarme zum Anzeigen eines nicht ordnungsgemäßen Betriebsvorgangs der Prozessanlage bzw. eines auf dieser ablaufenden Teilprozesses vorgesehen.

Die Konfigurationsmatrizen Matrix A, Matrix B, Matrix C enthalten als Einträge Korrelationswerte zum Korrelieren jedes Prozesszustands Zustand Ai, Zustand Bi, Zustand Ci mit der entsprechenden Summe der für den jeweiligen Teilprozess A bis C generierbaren Alarminformationen Alarm Ai, Alarm Bi, Alarm Ci. Die Korrelationswerte sind in Figur 1 in Form von Kreuzen "X" bzw. leeren (weißen) Feldern in den entsprechenden Matrizen dargestellt. Dabei betrifft jeder Matrixeintrag ein aus einem Prozesszustand und einer Alarminformation gebildetes Paar. Entsprechend ist jedem dieser Paare ein erster Wert ("X") oder ein zweiter Wert (weißes Feld) als Korrelationswert zugewiesen.

Die Matrizen Matrix A, Matrix B, Matrix C dienen erfindungsgemäß dazu, in Abhängigkeit von einem bestimmten/ermittelten Prozesszustand der Prozessanlage 1 bzw. eines entsprechenden Teilprozesses A bis C diejenigen im Rahmen dieses Teilprozesses generierten Alarminformationen Alarm Ai, Alarm Bi, Alarm Ci nicht zur Anzeige zu bringen, d. h. auszublenden, denen als Korrelationswert der erste Wert ("X") zugewiesen wurde. Mit anderen Worten: Die "X"-Einträge in den Matrizen Matrix A, Matrix B, Matrix C in Figur 1 bilden eine Konfiguration nichtrelevanter Prozessalarme in Abhängigkeit von einem Prozesszustand und dienen dem Alarmverarbeitungssystem 6 als eine Art Maske zum Ausblenden von Alarminformationen, die somit nicht zur Anzeige mittels der Alarmanzeigeeinrichtung 7 gebracht werden.

Der Betrieb der erfindungsgemäßen Prozessanlage 1 wird nachfolgend nochmals zusammenfassend erläutert:

Für den Betrieb der Prozessanlage 1, d. h. zur Beschreibung der in den Teilprozessen A bis C ablaufenden Betriebsvorgänge werden eine Reihe von Zuständen Zustand Ai, Zustand Bi, Zustand Ci definiert, wie beispielsweise Anfahren, Normalbetrieb, Not-Aus, Herunterfahren oder dergleichen. Des Weiteren beinhaltet jeder Teilprozess A bis C bzw. die zugehörige Alarmgruppe eine Reihe von Alarmgebern, die bei einem Auftreten nicht ordnungsgemäßer Betriebsvorgänge innerhalb des betreffenden Teilprozesses entsprechende Alarminformationen oder Alarmsignale Alarm Ai, Alarm Bi, Alarm Ci erzeugen. Mit Hilfe der Konfigurationsmatrizen Matrix A, Matrix B, Matrix C wird festgelegt, welche Prozessalarme in welchem Zustand eines jeweiligen Teilprozesses nichtrelevant sind und daher, obgleich sie auf Prozessebene 3 generiert werden, auf Prozessleitebene 2 nicht zur Anzeige gebracht werden müssen, beispielsweise indem eine Sirene eingeschaltet oder ein Warnhinweis auf einem Bildschirm gezeigt wird, wie dies mit Hilfe der Alarmanzeigeeinrichtung 7 möglich wäre.

Mit anderen Worten: Durch die Alarmgruppe des betreffenden Teilprozesses A bis C werden im Falle nicht ordnungsgemäßer Betriebsvorgänge entsprechende Alarminformationen erzeugt und über den zugeordneten Meldebaustein MA, MB, MC an das Alarmverarbeitungssystem 6 übermittelt. Gleichzeitig bestimmen die den Teilprozessen A bis C jeweils zugeordneten Zustandsbausteine ZA, ZB, ZC (regelmäßig/kontinuierlich) den gegenwärtigen Betriebszustand des Teilprozesses und übermitteln diesen ebenfalls an das Alarmverarbeitungssystem 6. Das Alarmverarbeitungssystem hat somit jederzeit Kenntnis davon, in welchem Prozesszustand sich ein bestimmter Teilprozess befindet. Somit kann anhand der zugehörigen Konfigurationsmatrix Matrix A, Matrix B, Matrix C in Abhängigkeit von dem jeweiligen Prozesszustand des Teilprozesses bestimmt werden, welche der (anstehenden) Prozessalarme Ai, Bi, Ci in dem gegenwärtigen Zustand des Teilprozesses relevant sind (weißes Feld in der Matrix) und welche nicht ("X"). Dabei erfolgt das so genannte Alarm-Hiding (Ausblenden anstehender Alarminformationen) ausschließlich auf Prozessleitebene durch das Alarmverarbeitungssystem 6, an dem weiterhin alle durch die Alarmgruppen erzeugten Alarminformationen anliegen. Das Alarmverarbeitungssystem 6 entscheidet anschließend anhand der Konfigurationsmatrizen, welche Alarminformationen über die Alarmanzeigeeinrichtung 7 zur Anzeige gebracht werden und welche nicht.

Bei der in Figur 1 gezeigten Ausgestaltung der erfindungsgemäßen Prozessanlage 1 übermittelt das Alarmverarbeitungssystem 6 unabhängig von einer Anzeige von Alarminformationen mittels der Alarmanzeigeeinrichtung 7 alle generierten Alarminformationen, d. h. alle relevanten und alle nichtrelevanten Prozessalarme an die Speichereinrichtung 9 bzw. das darin geführte Alarmjournal 10, sodass unabhängig von der Anzeige der Alarminformationen jederzeit eine (nachträgliche) Kontrolle des Anlagenzustands möglich ist.

In dieser Weise erfolgt erfindungsgemäß die Projektierung der Relevanz eines Alarms für eine Bedienperson (Operator) der erfindungsgemäßen Prozessanlage in Bezug auf die Prozesszustände in einfacher und eindeutiger Weise über eine Matrix und erfordert insbesondere keine Programmier- oder Systemkenntnisse. Es genügt, wenn der Projektierungsingenieur, der die Anlage bezüglich der Automatisierungsfunktion konfiguriert hat, Prozesskenntnisse hat. Durch die dargestellte Gruppierung aller alarmgebenden Funktionen eines Teilprozesses zu einer Alarmgruppe ist zudem eine anlagenweite Alarmverarbeitung möglich, die - wie in Figur 1 gezeigt - mit einer vorteilhaften zentralen Datenhaltung und -persistenz auch bei verteilten Systemen einhergeht.

Figur 2 zeigt anhand einer schematischen Darstellung die Kopierung aller alarmgebenden Funktionen (vorliegend auch als Alarmgeber bezeichnet) eines Teilprozesses (vgl. Teilprozesse A bis C in Figur 1) zu einer den Teilprozessen jeweils zugeordneten Alarmgruppe. Die einzelnen Alarmgruppen sind in Figur 2 durch kreisähnliche Umgrenzungslinien dargestellt und tragen ähnliche Bezugszeichen A', B', wie die entsprechenden Teilprozesse in Figur 1. Jede Alarmgruppe A', B' enthält eine Anzahl von Alarmgebern FB01 bis FB06 bzw. FB07 bis FB09, die jeweils als zu einer entsprechenden Alarmgruppe A', B' gehörig gekennzeichnet sind "A'" bzw. "B'". Wie bereits dargestellt wurde, erzeugen die Alarmgeber FB01 bis FB09 Alarminformationen zum Anzeigen nicht ordnungsgemäßer Betriebsvorgänge der Prozessanlage bzw. des der jeweiligen Alarmgruppe zugeordneten Teilprozesses, welche durch den zugehörigen Meldebaustein MA bis MC (Figur 1) an das Alarmverarbeitungssystem 6 übermittelt werden.

Zusätzlich weist jede Alarmgruppe A', B' in Figur 2 noch einen Zustandsbaustein SR1 bzw. SR2 auf, der ebenfalls als zu der jeweiligen Alarmgruppe A', B' gehörig gekennzeichnet ist "A'", "B'". Wie ebenfalls unter Bezugnahme auf Figur 1 dargestellt wurde, dienen die Zustandsbausteine SR1, SR2, die den dort gezeigten Zustandsbausteinen ZA bis ZC entsprechen, zum Bestimmen eines (gegenwärtigen) Zustands des betreffenden Teilprozesses der Prozessanlage und übermitteln diesen in normierter Form an das Alarmverarbeitungssystem 6 (Figur 1). Die Zustandsbausteine ZA bis ZC bzw. SR1, SR2 lassen sich daher auch als Zustandsnormierungsbausteine bezeichnen.

Wie vorstehend bereits detailliert erläutert wurde, dienen diese Zustände erfindungsgemäß dazu, anhand der Konfigurationsmatrizen Matrix A, Matrix B, Matrix C (Figur 1) zu entscheiden, welche generierten Alarminformationen in Abhängigkeit von dem bestimmten Prozesszustand zur Anzeige gebracht werden sollen und welche nicht.

Figur 3 zeigt schematisch einen der einem Teilprozess der Figuren 1 oder 2 zugeordneten Zustandsbausteine ZA bis ZC bzw. SR1, SR2. Informationen über den Prozesszustand eines Teilprozesses werden dem Zustandsbaustein in Form von Booleschen Eingangsparametern zur Verfügung gestellt, die in Figur 3 mit STATE_XX bezeichnet sind. Im Zuge des dargestellten Ausführungsbeispiels können auf diese Weise bis zu zweiunddreißig Eingangsparameter vorgegeben werden. Die Eingangsparameter STATE_XX definieren (codieren) einen bestimmten Prozesszustand, welcher dem Zustandsbaustein durch die Steuerlogik eines (nicht gezeigten) Anwenderprogramms zur Steuerung des Automatisierungsprozesses 4 auf Prozessebene 3 (Figur 1) mitgeteilt wird. Auf diese Weise sind bei dem gezeigten Ausführungsbeispiel der vorliegenden Erfindung bis zu zweiunddreißig unterschiedliche Prozesszustände der Prozessanlage bzw. der ausgeführten Teilprozesse A bis C (Figur 1) definierbar. Der Zustandsbaustein gemäß Figur 3 wandelt den so definierten (codierten) Zustand in einen ganzzahligen Wert QSTATE auf einem Wertebereich von null bis zweiunddreißig um und übermittelt diesen in Form eines den jeweiligen Prozesszustand repräsentierenden Zustandssignals an das Alarmverarbeitungssystem 6, wie in Figur 1 gezeigt.

Wenn bei dem gezeigten Ausführungsbeispiel der Figur 3 keines der linearen Eingangssignale STATE_XX einen hohen Logikpegel (1) hat, ergibt sich für das Zustandssignal QSTATE der Wert Null, und an einem weiteren Ausgang QERR des Zustandsbausteins wird ein Fehlersignal mit niedrigem Logikpegel (0) ausgegeben, was einen fehlerfreien Betrieb des Zustandsbausteins (nicht der Prozessanlage) anzeigt. Für den Fall, dass mehr als eines der binären Eingangssignale STATE_XX einen hohen Logikpegel (1) besitzen, wird als Zustandssignal QSTATE wiederum der Wert Null ausgegeben und am Ausgang QERR ein Fehlersignal mit hohem Logikpegel (1) erzeugt.

Das Fehlersignal QERR wird ebenfalls an das Alarmverarbeitungssystem 6 in Figur 1 übertragen, obwohl dies dort nicht explizit dargestellt ist. Es dient einer übergeordneten Steuerung des erfindungsgemäßen Alarm-Hiding-Mechanismus, wobei die unter Bezugnahme auf Figur 1 detailliert erläuterten Konfigurationsmatrizen Matrix A, Matrix B, Matrix C zum Ausblenden, d. h. zum Nicht-Anzeigen von Alarminformationen nur dann verwendet werden, wenn QERR = 0, d. h., wenn durch einen betreffenden Zustandsbaustein ZA bis ZC; SR1, SR2 kein Fehler signalisiert wird. Im entgegengesetzten Fall wird die entsprechende zugeordnete Konfigurationsmatrix Matrix A, Matrix B, Matrix C nicht verwendet, sondern es werden zur Sicherheit alle anstehenden generierten Alarminformationen für den betreffenden Teilprozess angezeigt und parallel archiviert.

Figur 4 zeigt anhand eines Zeitablaufdiagramms das Verhalten einer erfindungsgemäßen Prozessanlage im Betrieb (Runtime-Verhalten). Dargestellt ist eine Anzahl von Signalverläufen S1 bis S4 in Anhängigkeit von der Zeit t. Dabei sind bestimmte Zeitpunkte des Zeitablaufs zwecks einfacherer Identifizierbarkeit weiterhin mit Ziffern bezeichnet und werden nachfolgend entsprechend dieser Nummerierung mit t1, t2, ... bezeichnet. Des Weiteren sind in Figur 4 in Anführungszeichen bestimmte Steuerbefehle zum Betreiben der Prozessanlage 1 (Figur 1, bzw. des dort vorhandenen Alarmsystems 5) angegeben, die über punktierte Verbindungslinien bestimmten Zeitpunkten bzw. Signalübergängen der Signale S1 bis S4 zugeordnet sind. Bei den Signalen S1 bis S4 handelt es sich um binäre Signale, die zwischen einem hohen Logikpegel (1) und einem niedrigen Logikpegel (0) umschaltbar sind.

Der in Figur 4 angegebene Steuerbefehl "Activate alarm hiding" wird in Abhängigkeit der Konfigurationsmatrizen Matrix A, Matrix B, Matrix C (Figur 1), welche zum Ausblenden von Rahmeninformationen in Abhängigkeit von Prozesszuständen der Prozessanlage verwendet werden, erzeugt. Er bewirkt ein Umschalten des entsprechenden Signals S1 von einem niedrigen auf einen hohen Logikpegel zu den Zeitpunkten t1 und t8. Solange das Signal S1 nicht wieder auf den niedrigen Logikpegel zurückgeschaltet wird ("deactivate alarm hiding"; Zeitpunkte t5, t12) ist der im Rahmen der vorliegenden Erfindung vorgeschlagene Alarm-Hiding-Mechanismus aktiv. Dies lässt sich in Figur 4 anhand der Signalverläufe S2 bis S4 betreffend das Anstehen von Alarminformationen in unterschiedlichen Bereichen der Prozessanlage nachvollziehen.

Der Signalverlauf S2 veranschaulicht das Anstehen bzw. die Generierung von mindestens einem Alarm bzw. einer Alarminformation auf Prozessebene 3 (Figur 1), beispielsweise durch die zu Teilprozess A gehörige Alarmgruppe A' (Figur 2). Dieser Alarm wird gemäß Figur 4 zwischen den Zeitpunkten t2 und t3, t4 und t6, t7 und t9 sowie t10 und t11 erzeugt. Signalverlauf S3 zeigt das Anstehen dieses Alarms in dem Alarmverarbeitungssystem 6 (Figur 1) an. Da erfindungsgemäß kein Ausblenden und Unterdrücken von Alarminformationen auf Prozessebene 3 stattfindet, entspricht der Signalverlauf S3 genau dem bereits beschriebenen Signalverlauf S2, da jeder auf Prozessebene erzeugte Alarm in Form einer entsprechenden Alarminformation auch auf die Prozessleitebene 2, d. h. in das Alarmverarbeitungssystem 6 gelangt.

Der Signalverlauf S4 zeigt an, wie das Alarmverarbeitungssystem 6 (Figur 1) unter Verwendung einer entsprechenden Konfigurationsmatrix mit den anstehenden Alarminformationen verfährt. Speziell gibt Signalverlauf S4 an, ob die Alarminformation gemäß Signalverlauf S2, S3 in der Alarmanzeigeeinrichtung 7 (Figur 1) zur Anzeige gebracht wird, was durch einen hohen Logikpegel (1) symbolisiert ist. Vorausgesetzt, in der zu verwendenden Konfigurationsmatrix ist für den betreffenden Alarm in Abhängigkeit von einem gegenwärtigen Prozesszustand ein entsprechender (erster) Korrelationswert ("X" in Figur 1) eingetragen, wird der anstehende Alarm gemäß Signalverlauf S4 bei der Anzeige unterdrückt, was in Figur 4 durch dickere waagerechte Balken symbolisiert ist, und gelangt nur in der Zeit von t5 bis t8 zur Anzeige, da während dieser Zeit der im Rahmen der vorliegenden Erfindung vorgeschlagene Alarm-Hiding-Mechanismus deaktiviert ist (S1 = 0).

Die in Figur 4 weiterhin angegebenen Steuerbefehle "activate alarm (coming)" und "deactive alarm (going)" korrelieren mit Zeitpunkten, in denen der betreffende Alarm aufgrund eines nicht ordnungsgemäßen Betriebsvorgangs aktiviert bzw. bei Rückkehr in einen ordnungsgemäßen Betriebsvorgang wieder deaktiviert wird.

Auf diese Weise ist das Alarmsystem 5 (Figur 1) in der Lage zu erkennen, wann die Prozessanlage bzw. eine Teilanlage/Teilprozess ihren Zustand ändert, sodass anstehende Alarme, die im neuen Anlagenzustand nach Maßgabe der Konfigurationsmatrizen nicht mehr relevant sind, ausgeblendet werden. Demgegenüber können ausgeblendete Alarme, die im neuen Anlagenzustand relevant werden, wieder eingeblendet werden.

In vorteilhafter Weise bietet das Alarmsystem 5 (Figur 1) weiterhin die Möglichkeit, einer Bedienperson eine Liste aller ausgeblendeten Alarme anzuzeigen. Alternativ oder zusätzlich kann eine Liste jener Alarme angezeigt werden, die auszublenden wären, wenn sie zu dem betreffenden Zeitpunkt vom (Teil-)Prozess generiert würden.

Darüber hinaus kann im Rahmen der vorliegenden Erfindung in dem Alarmsystem 5 (Figur 1) eine Timer-Funktion vorgesehen sein, sodass beim Umschalten in einen neuen Anlagenzustand bestimmte Alarme, die in diesem Zustand nicht mehr relevant sind, jedoch in einem vorhergehenden Zustand relevant waren, noch über einen bestimmten Zeitraum weiterverfolgt, d. h. angezeigt werden, wobei das erfindungsgemäße Ausblenden derartiger Alarme erst nach Ablauf eines in der Timer-Funktion vorhandenen Timers erfolgt.

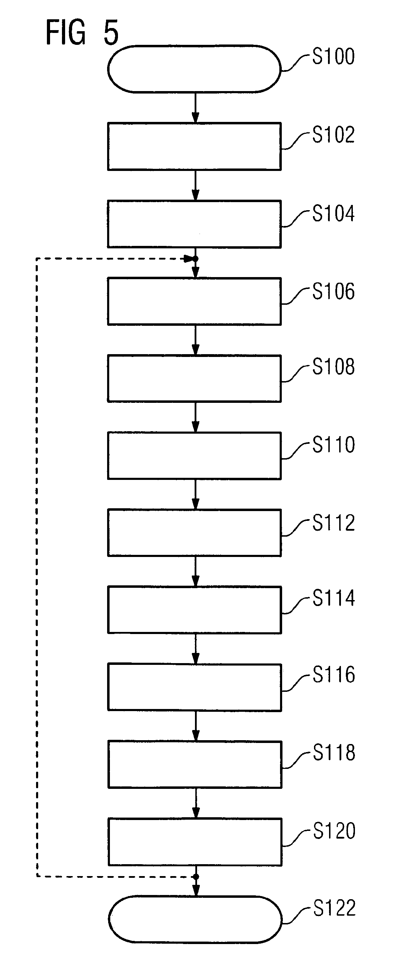

Figur 5 zeigt ein Flussdiagramm zur Darstellung einer Ausgestaltung des erfindungsgemäßen Verfahrens zum Betreiben einer Prozessanlage, insbesondere der Prozessanlage 1 in Figur 1.

Das Verfahren beginnt im Schritt S100. In einem anschließenden Schritt S102 wird eine Anzahl von Prozesszuständen der Prozessanlage definiert. Insbesondere können dabei in Schritt S102 auf Prozessebene eine Anzahl von Teilprozessen definiert werden, wobei jedem Teilprozess eine Anzahl von Teilprozesszuständen und eine Anzahl von generierbaren Alarminformationen in Form einer Alarmgruppe zugeordnet werden.

Anschließend wird in Schritt S104 jeder (Teil-)Prozesszustand mit der Summe der generierbaren, d. h. aller in Zusammenhang mit dem betreffenden (Teil-)Prozess generierbaren Alarminformationen korreliert, wobei jedem aus einem Prozesszustand und einer Alarminformation gebildeten Paar ein erster Wert oder ein zweiter Wert als Korrelationswert zugewiesen wird. Erfindungsgemäß erfolgt dabei die Korrelation in Schritt S104 vorzugsweise in Form wenigstens einer Konfigurationsmatrix, wie weiter oben bereits ausführlich dargestellt wurde.

Für die nachfolgende Beschreibung wird angenommen, dass der im Rahmen der vorliegenden Erfindung vorgeschlagene Alarm-Hiding-Mechanismus aktiviert ist (S1 = 1 in Figur 4).

In Schritt S106 wird ein gegenwärtiger Betriebszustand oder Teilbetriebszustand der Prozessanlage bestimmt.

Der bestimmte Zustand wird durch einen entsprechenden Zustandsbaustein an das Alarmverarbeitungssystem auf Prozessleitebene übermittelt (Schritt S108). Praktisch zeitgleich wird im Schritt S110 auch ein Fehlersignal (vgl. Figur 3) an das Alarmverarbeitungssystem übermittelt. Im Falle eines nicht ordnungsgemäßen Betriebszustands erzeugen in Schritt S112 die Alarmgeber wenigstens einer Alarmgruppe (Figur 2) entsprechende Alarme bzw. Alarminformationen, die in Schritt S114 durch einen zugeordneten Meldebaustein (Figur 1) ebenfalls an das Alarmverarbeitungssystem übertragen werden. Dieses ermittelt in Schritt S116, ob nach Maßgabe des übermittelten Fehlersignals der vorgeschlagene Alarm-Hiding-Mechanismus unter Verwendung der Konfigurationsmatrizen Anwendung findet.

Vorliegend sei angenommen, dass dies der Fall ist; somit erfolgt beim anschließenden Schritt aus S118 ein Ausblenden bestimmter Alarminformationen aufgrund der in den Matrizen enthaltenen Korrelationswerte, wobei nicht ausgeblendete Alarminformationen über die Alarmanzeigeeinrichtung zur Anzeige kommen. Praktisch zeitgleich werden in Schritt S120 wenigstens die ausgeblendeten Alarminformationen, vorzugsweise jedoch alle generierten Alarminformationen in der Speichereinrichtung der Prozessanlage archiviert.

Das Verfahren endet in Schritt S122. Alternativ und in an sich praxisrelevanter Weise kann das Verfahren jedoch im Anschluss an Schritt S120 nach Schritt S106 zurückkehren, was in Figur 5 durch eine gestrichelte Linie angedeutet ist. Entsprechend erfolgt dann in Schritt S106 eine erneute Bestimmung des gegenwärtigen Betriebszustands der Prozessanlage, woraufhin sich das Verfahren beginnend mit Schritt S108 entsprechend wiederholt.

Auf diese Weise erlaubt die Erfindung das Erkennen von Teilprozesszuständen zum Zweck der Beurteilung der Relevanz von Alarmen in Kombination mit bzw. basierend auf der Korrelation zwischen Teilanlagenzustand und der Summe aller Teilanlagenalarme, wobei diese Korrelation vorteilhafterweise in Form einer Matrix konfiguriert ist. Auf diese Weise ist eine Projektierung der Alarmrelevanz bei der erfindungsgemäßen Prozessanlage ohne System- und Programmierkenntnisse in einfacher Weise möglich.

## Patentansprüche

1. Verfahren zum Betreiben einer Prozessanlage (1), bei der auf Prozessebene (3) eine Anzahl von Alarminformationen (Alarm Ai, Bi, Ci) zum Anzeigen nicht ordnungsgemäßer Betriebsvorgänge der Prozessanlage (1) generiert werden,
**dadurch gekennzeichnet, dass**
a) eine Anzahl von Prozesszuständen (Zustand Ai, Bi, Ci) der Prozessanlage (1) definiert wird,
b) jeder Prozesszustand mit der Summe der generierbaren Alarminformationen korreliert wird, wobei jedem aus einem Prozesszustand und einer Alarminformation gebildeten Paar ein erster Wert oder ein zweiter Wert als Korrelationswert zugewiesen wird,
c) ein gegenwärtiger Betriebszustand der Prozessanlage bestimmt wird,
d) in Abhängigkeit von dem bestimmten Prozesszustand diejenigen Alarminformationen nicht zur Anzeige gebracht werden, denen als Korrelationswert der erste Wert zugewiesen wurde.

2. Verfahren nach Anspruch 1, **dadurch gekennzeichnet, dass** die Korrelation von Prozesszuständen und Alarminformationen in Form wenigstens einer Konfigurationsmatrix (Matrix A, B, C) erfolgt, wobei eine erste Dimension der Konfigurationsmatrix durch die definierten Prozesszustände und eine zweite Dimension der Konfigurationsmatrix durch die generierbaren Alarminformationen (Alarm Ai, Bi, Ci) gebildet wird, wobei die Korrelationswerte die Einträge der Konfigurationsmatrix darstellen.

3. Verfahren nach Anspruch 1 oder 2, **dadurch gekennzeichnet, dass** standardmäßig der zweite Wert als Korrelationswert zugewiesen wird.

4. Verfahren nach einem der Ansprüche 1 bis 3, **dadurch gekennzeichnet, dass** in Abhängigkeit von dem bestimmten Prozesszustand zumindest diejenigen Alarminformationen (Alarm Ai, Bi, Ci), denen als Korrelationswert der erste Wert zugewiesen wurde, in einer Speichereinrichtung (9, 10) archiviert werden.

5. Verfahren nach einem der Ansprüche 1 bis 4, **dadurch gekennzeichnet, dass** alle generierten Alarminformationen (Alarm Ai, Bi, Ci) in der Speichereinrichtung (9, 10) archiviert werden.

6. Verfahren nach einem der Ansprüche 1 bis 5, **dadurch gekennzeichnet, dass** der Prozesszustand (Zustand Ai, Bi, Ci) in Schritt c) auf Prozessebene (3) bestimmt und zusammen mit der Summe der generierten Alarminformationen (Alarm Ai, Bi, Ci) zu einer Prozessleitebene (2) der Prozessanlage (1) übertragen wird und dass die Schritte b) und d) in einem Alarmverarbeitungssystem (6) auf der Prozessleitebene (2) durchgeführt werden.

7. Verfahren nach einem der Ansprüche 1 bis 6, **dadurch gekennzeichnet, dass** bei einem Wechsel der Prozessanlage (1) in einen neuen Prozesszustand (Zustand Ai, Bi, Ci) im Zeitpunkt des Wechsels Schritt d) erneut ausgeführt wird, wobei anstehende, generierte Alarminformationen (Alarm Ai, Bi, Ci) in Abhängigkeit von dem neuen Prozesszustand zur Anzeige gebracht werden.

8. Verfahren nach einem der Ansprüche 1 bis 7, **dadurch gekennzeichnet, dass** bei fehlerhafter Bestimmung des Prozesszustands (Zustand Ai, Bi, Ci) in Schritt c) im nachfolgenden Schritt d) auch alle weiteren generierten Alarminformationen (Alarm Ai, Bi, Ci) zur Anzeige gebracht werden.

9. Verfahren nach einem der Ansprüche 1 bis 8, **dadurch gekennzeichnet, dass** auf Prozessebene (3) eine Anzahl von Teilprozessen (A, B, C) definiert wird, wobei jedem Teilprozess eine Anzahl von Teilprozesszuständen (Zustand Ai, Bi, Ci) und eine Anzahl von generierbaren Alarminformationen (Alarm Ai, Bi, Ci) in Form einer Alarmgruppe zugeordnet werden und dass die Schritte b) bis d) gemäß Anspruch 1 für jeden Teilprozess (A, B, C) separat ausgeführt werden.

10. Prozessanlage (1) mit einer Anzahl von Alarmgebern (FB01 bis FB09) auf Prozessebene (3), die zum Generieren einer Anzahl von Alarminformationen (Alarm Ai, Bi, Ci) zum Anzeigen nicht ordnungsgemäßer Betriebsvorgänge der Prozessanlage (1) ausgebildet sind, und mit einer Alarmanzeigeeinrichtung (7) zum Anzeigen von Alarminformationen (Alarm Ai, Bi, Ci), **gekennzeichnet durch**:
- mindestens einen einer Teilgruppe (A, B, C) der Alarmgeber zugeordneten Zustandsbaustein (ZA, ZB, ZC), der zum Bestimmen wenigstens eines gegenwärtigen Prozesszustands (Zustand Ai, Bi, Ci) der Prozessanlage (1) aus einer Anzahl definierter Prozesszustände ausgebildet ist,
- ein Alarmverarbeitungssystem (6) auf Prozessleitebene (2), das die generierten Alarminformationen (Alarm Ai, Bi, Ci) und ein den bestimmten Prozesszustand (Zustand Ai, Bi, Ci) repräsentierendes Zustandssignal empfängt und das zum Korrelieren jedes definierten Prozesszustands mit der Summe der empfangenen Alarminformationen ausgebildet ist, wobei jedem aus einem Prozesszustand und einer Alarminformation gebildeten Paar ein erster Wert oder ein zweiter Wert als Korrelationswert zuweisbar ist, wobei das Alarmverarbeitungssystem (6) in Abhängigkeit von dem Zustandssignal zum Steuern der Alarmanzeigeeinrichtung (7) zum Ausblenden derjenigen Alarminformationen (Alarm Ai, Bi, Ci) ausgebildet ist, denen als Korrelationswert der erste Wert zugewiesen wurde.

11. Prozessanlage (1) nach Anspruch 10, **dadurch gekennzeichnet, dass** das Alarmverarbeitungssystem (6) zum Korrelieren der Prozesszustände (Zustand Ai, Bi, Ci) und der Alarminformationen (Alarm Ai, Bi, Ci) wenigstens eine Konfigurationsmatrix (Matrix A, B, C) aufweist, wobei eine erste Dimension der Konfigurationsmatrix durch die definierten Prozesszustände und eine zweite Dimension der Konfigurationsmatrix durch die generierbaren Alarminformationen gebildet sind, wobei die Korrelationswerte die Einträge der Konfigurationsmatrix darstellen.

12. Computerprogrammprodukt zum Betreiben einer Prozessanlage (1), das Programmcodesequenzen aufweist, die bei Ausführung in einem Prozessleitsystem (5) der Prozessanlage in Abhängigkeit von ermittelten Prozesszustandsdaten der Prozessanlage zum Verarbeiten von auf Prozessebene (3) generierten Alarminformationen (Alarm Ai, Bi, Ci) gemäß einem Verfahren nach einem der Ansprüche 1 bis 9 ausgebildet sind.

## Geänderte Patentansprüche

### Geänderte Patentansprüche gemäss Regel 86(2) EPÜ.

**1.** Verfahren zum Betreiben einer Prozessanlage (1), bei der auf Prozessebene (3) eine Mehrzahl von Alarminformationen (Alarm Ai, Bi, Ci) zum Anzeigen nicht ordnungsgemäßer Betriebsvorgänge der Prozessanlage (1) generiert werden, bei dem
a) eine Mehrzahl von Prozesszuständen (Zustand Ai, Bi, Ci) der Prozessanlage (1) definiert wird,
b) jeder Prozesszustand mit jeder der generierbaren Alarminformationen korreliert wird, wobei jedem aus einem Prozesszustand und einer Alarminformation gebildeten Paar ein erster Wert oder ein zweiter Wert als Korrelationswert zugewiesen wird,
c) ein gegenwärtiger Prozesszustand der Prozessanlage bestimmt wird,
d) in Abhängigkeit von dem bestimmten Prozesszustand diejenigen Alarminformationen nicht zur Anzeige gebracht werden, denen als Korrelationswert der erste Wert zugewiesen wurde, wobei die Korrelation von Prozesszuständen und Alarminformationen in Form wenigstens einer Konfigurationsmatrix (Matrix A, B, C) erfolgt, wobei eine erste Dimension der Konfigurationsmatrix durch die definierten Prozesszustände und eine zweite Dimension der Konfigurationsmatrix durch die generierbaren Alarminformationen (Alarm Ai, Bi, Ci) gebildet wird, wobei die Korrelationswerte die Einträge der Konfigurationsmatrix darstellen.

**2.** Verfahren nach Anspruch 1, **dadurch gekennzeichnet, dass** standardmäßig der zweite Wert als Korrelationswert zugewiesen wird.

**3.** Verfahren nach Anspruch 1 oder 2, **dadurch gekennzeichnet, dass** in Abhängigkeit von dem bestimmten Prozesszustand zumindest diejenigen Alarminformationen (Alarm Ai, Bi, Ci), denen als Korrelationswert der erste Wert zugewiesen wurde, in einer Speichereinrichtung (9, 10) archiviert werden.

**4.** Verfahren nach einem der Ansprüche 1 bis 3, **dadurch gekennzeichnet, dass** alle generierten Alarminformationen (Alarm Ai, Bi, Ci) in der Speichereinrichtung (9, 10) archiviert werden.

**5.** Verfahren nach einem der Ansprüche 1 bis 4, **dadurch gekennzeichnet, dass** der Prozesszustand (Zustand Ai, Bi, Ci) in Schritt c) auf Prozessebene (3) bestimmt und zusammen mit der Summe der generierten Alarminformationen (Alarm Ai, Bi, Ci) zu einer Prozessleitebene (2) der Prozessanlage (1) übertragen wird und dass die Schritte b) und d) in einem Alarmverarbeitungssystem (6) auf der Prozessleitebene (2) durchgeführt werden.

**6.** Verfahren nach einem der Ansprüche 1 bis 5, **dadurch gekennzeichnet, dass** bei einem Wechsel der Prozessanlage (1) in einen neuen Prozesszustand (Zustand Ai, Bi, Ci) im Zeitpunkt des Wechsels Schritt d) erneut ausgeführt wird, wobei anstehende, generierte Alarminformationen (Alarm Ai, Bi, Ci) in Abhängigkeit von dem neuen Prozesszustand zur Anzeige gebracht werden.

**7.** Verfahren nach einem der Ansprüche 1 bis 6, **dadurch gekennzeichnet, dass** bei fehlerhafter Bestimmung des Prozesszustands (Zustand Ai, Bi, Ci) in Schritt c) im nachfolgenden Schritt d) alle generierten Alarminformationen (Alarm Ai, Bi, Ci) zur Anzeige gebracht werden.

**8.** Verfahren nach einem der Ansprüche 1 bis 7, **dadurch gekennzeichnet, dass** auf Prozessebene (3) eine Anzahl von Teilprozessen (A, B, C) definiert wird, wobei jedem Teilprozess eine Anzahl von Teilprozesszuständen (Zustand Ai, Bi, Ci) und eine Anzahl von generierbaren Alarminformationen (Alarm Ai, Bi, Ci) in Form einer Alarmgruppe zugeordnet werden, und dass die Schritte b) bis d) gemäß Anspruch 1 für jeden Teilprozess (A, B, C) separat ausgeführt werden.

**9.** Prozessanlage (1) mit einer Mehrzahl von Alarmgebern (FB01 bis FB09) auf Prozessebene (3), die zum Generieren einer Mehrzahl von Alarminformationen (Alarm Ai, Bi, Ci) zum Anzeigen nicht ordnungsgemäßer Betriebsvorgänge der Prozessanlage (1) ausgebildet sind, und mit einer Alarmanzeigeeinrichtung (7) zum Anzeigen von Alarminformationen (Alarm Ai, Bi, Ci), **gekennzeichnet durch**:
- mindestens einen einer Teilgruppe (A, B, C) der Alarmgeber zugeordneten Zustandsbaustein (ZA, ZB, ZC), der zum Bestimmen wenigstens eines gegenwärtigen Prozesszustands (Zustand Ai, Bi, Ci) der Prozessanlage (1) aus einer Anzahl definierter Prozesszustände ausgebildet ist,
- ein Alarmverarbeitungssystem (6) auf Prozessleitebene (2), das die generierten Alarminformationen (Alarm Ai, Bi, Ci) und ein den bestimmten Prozesszustand (Zustand Ai, Bi, Ci) repräsentierendes Zustandssignal empfängt und das zum Korrelieren jedes definierten Prozesszustands mit der Summe der empfangenen Alarminformationen ausgebildet ist, wobei jedem aus einem Prozesszustand und einer Alarminformation gebildeten Paar ein erster Wert oder ein zweiter Wert als Korrelationswert zuweisbar ist, wobei das Alarmverarbeitungssystem (6)
- in Abhängigkeit von dem Zustandssignal zum Steuern der Alarmanzeigeeinrichtung (7) zum Ausblenden derjenigen Alarminformationen (Alarm Ai, Bi, Ci) ausgebildet ist, denen als Korrelationswert der erste Wert zugewiesen wurde,
- zum Korrelieren der Prozesszustände (Zustand Ai, Bi, Ci) und der Alarminformationen (Alarm Ai, Bi, Ci) wenigstens eine Konfigurationsmatrix (Matrix A, B, C) aufweist, wobei eine erste Dimension der Konfigurationsmatrix **durch** die definierten Prozesszustände und eine zweite Dimension der Konfigurationsmatrix **durch** die generierbaren Alarminformationen gebildet sind, wobei die Korrelationswerte die Einträge der Konfigurationsmatrix darstellen.

**10.** Computerprogrammprodukt zum Betreiben einer Prozessanlage (1), das Programmcodesequenzen aufweist, die bei Ausführung in einem Prozessleitsystem (5) der Prozessanlage in Abhängigkeit von ermittelten Prozesszustandsdaten der Prozessanlage zum Verarbeiten von auf Prozessebene (3) generierten Alarminformationen (Alarm Ai, Bi, Ci) gemäß einem Verfahren nach einem der Ansprüche 1 bis 8 ausgebildet sind.
